# FASCICULE DE BREVET EUROPEEN

(11) **EP 0 362 027 B1**
(45) Date de publication et mention de la délivrance du brevet: **05.01.1994**
(21) Numéro de dépôt: 89402579.0
(22) Date de dépôt: 20.09.1989
(51) Int. Cl.: E05F 11/44, B60J 1/17

(54) **Dispositif d'accouplement coulissant entre une vitre et un mécanisme de lève-vitre dans un véhicule**
Kupplungsgleitvorrichtung zwischen einem Fenster und einem Fensterhebemechanismus in einem Fahrzeug
Sliding clutch device between a window and a window opener in a vehicle

(30) Priorité: 29.09.1988 FR 8812760
(43) Date de publication de la demande: 04.04.1990
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Bertolini,Carlo, F-75011 Paris (FR); Becerril,Philippe, F-45150 Darvoy (FR)
(74) Mandataire: Martin, Jean-Paul

(56) Documents cités:
- EP-A- 0 173 091
- DE-A- 3 108 244
- US-A- 1 975 317

## Description

La présente invention a pour objet un dispositif d'accouplement entre une vitre et un mécanisme de lève-vitre dans un véhicule automobile.

Comme on le sait, la pose des vitres sur les mécanismes lève-vitres correspondants dans les portes de véhicules doit être exécutée manuellement sur les chaînes de montage de véhicules. L'opérateur amène à cet effet les roulettes ou galets d'extrémités des bras du lève-vitre dans des coulisses fixées au bas de la vitre. On connaît aussi, par le document US-A 1 975 317, un dispositif d' accouplement entre une vitre et un mécanisme de lève-vitre dans un véhicule automobile, comprenant en combinaison deux profilés conjugués dont un premier profilé est adapté pour pouvoir être fixé au bas de la vitre et le second profilé 21 est agencé pour être articulé sur un bras du lève-vitre, et les sections de ces profilés sont telles que le second profilé peut être emboîté dans le premier et les sections conjuguées des deux profilés définissant un degré de rotation et un degré de translation.

Les opérations de montage de ces dispositifs, qui se font partiellement "en aveugle", sont trop complexes pour pouvoir être exécutées par un robot, dans le cadre de l'automatisation des chaînes de véhicules automobiles.

L'invention a donc pour but de réaliser un dispositif d'accouplement du type défini par le préambule de la revendication 1, de telle sorte que l'accouplement puisse être réalisé par un robot portant la vitre, à l'exclusion de toute intervention manuelle.

Suivant l'invention, le dispositif d'accouplement comprend les caractéristiques mentionnées à la partie caractérisante de la revendication 1.

Le mouvement de la vitre étant une translation sensiblement verticale, l'agencement selon l'invention permet d'exécuter automatiquement par un robot l'emboîtement des deux profilés par clipsage.

Suivant une particularité de l'invention, le premier profilé présente une lèvre saillant latéralement en section et s'étendant longitudinalement en limitant de ce côté la surface arrondie, et dans la branche rigide du second profilé est formée une gorge longitudinale ouverte vers le bas, adaptée pour recevoir la lèvre et maintenir les profilés assemblés après clipsage, la lèvre étant incurvée et orientée vers le haut lorsque la vitre est sensiblement verticale.

D'autres particularités et avantages de l'invention apparaitront au cours de la description qui va suivre, faite en référence aux dessins annexés qui en illustrent une forme de réalisation à titre d'exemple non limitatif.

La figure 1 est une vue en perspective simplifiée d'un mécanisme lève-vitre et de la vitre correspondante d'une porte non représentée de véhicule automobile.

La figure 2 est une vue en perspective partielle éclatée de l'un des deux dispositifs d'accouplement selon l'invention, visibles schématiquement à la Fig.1.

Les figures 3, 4 et 5 sont des vues en coupe transversale des deux profilés du dispositif de la Fig.2, illustrant une séquence d'accouplement.

La figure 6 est une vue en perspective éclatée d'une seconde forme de réalisation du dispositif d'accouplement selon l'invention, équipant l'un des bras du lève-vitre visible à la Fig.1.

La figure 7 est une vue en perspective du dispositif suivant la flèche K de la Fig.6, c'est-à-dire du côté de la face arrière du profilé recevant la vitre.

Les figures 8, 9 et 10 sont des vues en coupe transversale suivant 8-8 de la Fig.7, illustrant une séquence d'accouplement.

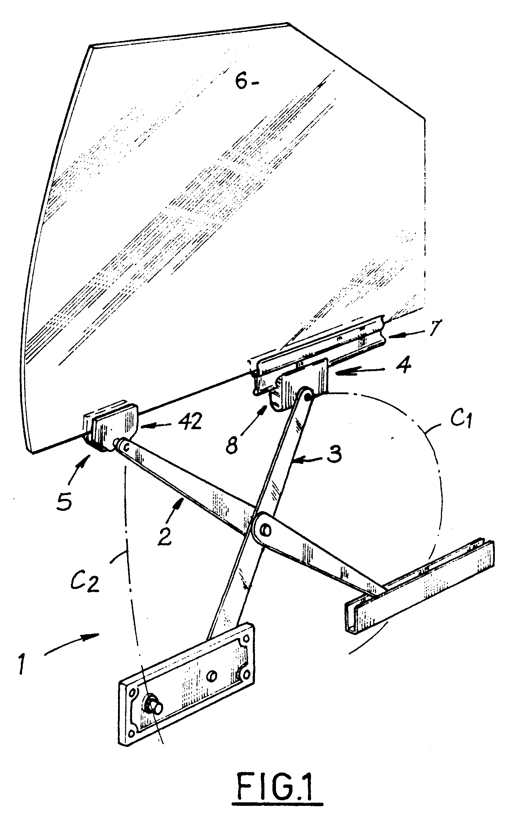

Le dispositif représenté à la Fig.1 comprend un mécanisme de lève-vitre 1 réalisé de façon connu en soi pour pouvoir être logé dans une porte non représentée de véhicule. Il comprend notamment deux bras 2,3 de support d'une vitre 6 par l'intermédiaire de deux dispositifs d'accouplement respectifs 5 et 4.

Les articulations des bras 2 et 3 sont conçues de telle sorte que durant les montées et descentes de la vitre 4, l'extrémité supérieure du bras 3 décrit une courbe semi-circulaire C1 tandis que l'extrémité supérieure du bras 2 décrit un parcours C2 presque rectiligne. En effet, le dispositif d'accouplement 4 est agencé pour permettre un déplacement coulissant de l'un de ses éléments constitutifs par rapport à la vitre 6, ce qui n'est pas le cas du dispositif d'accouplement 5.

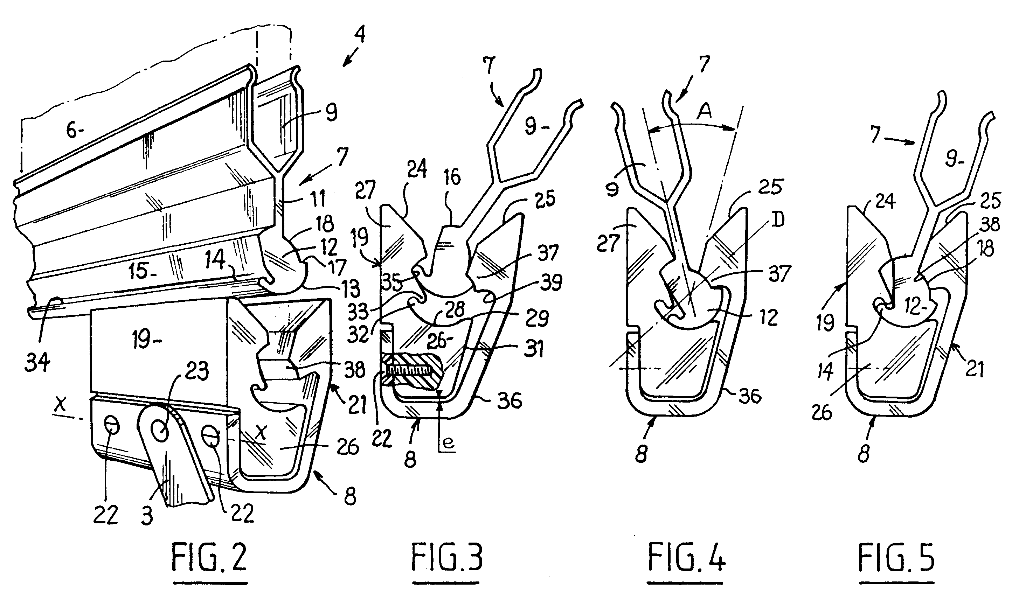

Le dispositif d'accouplement 4 comporte (Fig.2 à 5) en combinaison deux profilés conjugués 7 et 8 : le premier profilé 7 est adapté pour pouvoir être fixé au bas de la vitre 6 et présente à cet effet une gorge longitudinale 9 en U dirigée vers le haut, le second profilé 8 étant agencé pour être articulé sur le bras 3.

Les sections des profilés 7 et 8 sont telles que le premier profilé 7 peut être emboîté par clipsage et par un déplacement situé sensiblement dans le plan général de la vitre 6 et du mouvement de celle-ci, les sections conjuguées des deux profilés 7,8 définissant un degré de rotation et un degré de translation du profilé 8 par rapport au profilé 7.

Le fond de la gorge 9 se prolonge par un voile central 11 qui lui-même est prolongé par une partie terminale 12 plus massive. La surface inférieure 13 de cette partie 12 est arrondie (convexe) et limitée d'un côté par une lèvre incurvée 14 saillant latéralement en section et qui s'étend longitudinalement sur toute la longueur du profilé 7. Au-delà de la lèvre 14 s'étend une surface plane 15 reliée à la base du voile 11 par un ressaut incliné 16 et séparée de la lèvre 14 par une gorge longitudinale 34. Du côté opposé à la lèvre saillante 14, la surface convexe 13 est limitée par un décrochement radial 17 prolongé par une surface convexe 18.

Le second profilé 8 est ouvert en entonnoir et constitué de deux branches fixées l'une à l'autre : une branche non flexible, rigide 19 sur laquelle est articulée une branche flexible 21 fixée à la branche 19, par exemple par des vis 22. L'alignement des têtes de vis 22 définit l'axe longitudinal X-X d'articulation de la branche 21, laquelle enveloppe la base de la branche 19 sensiblement jusqu'au-delà des vis de fixation 22 et de l'axe 23 d'articulation du profilé 8 sur le bras 3. Les bords supérieurs en vis-à-vis 24 et 25 des branches 19 et 21 sont inclinés l'un vers l'autre de façon à délimiter entre eux une ouverture en entonnoir (vue en section). Cet entonnoir permet l'introduction de la partie terminale 12 du profilé 7 entre les deux branches 19 et 21 par clipsage grâce à l'écartement de la branche 21.

La branche rigide 19 comporte une partie massive 26 recevant les vis 22 et qui s'étend dans la partie inférieure de la branche 21 avec entre elles un intervalle approprié e. Cette partie massive 26 est prolongée par une partie supérieure plus mince 27 terminée par le bord incliné 24. La partie massive 26 présente une surface intérieure concave 28 d'appui pour le profilé 7, et à cet effet le rayon de courbure de la surface concave 28 correspond à celui de la surface convexe 13.

La surface 28 est limitée d'un côté par une arête 29 qui forme l'intersection du côté 31 avec la surface 28, tandis que du côté opposé la surface 28 se raccorde au fond d'un dégagement 32 de forme complémentaire de celle de la lèvre 14 afin de pouvoir recevoir cette dernière lorsque les deux profilés 7,8 sont complètement emboités (Fig.5). Le dégagement 32 est délimité, au-dessus de la surface 28, par une lèvre saillante 33 dimensionnée pour pouvoir venir s'introduire dans la gorge correspondante 34. Enfin, la lèvre 33 est reliée au bord incliné 24 par un évidement 35.

La branche flexible 21 comporte, entre son bord supérieur 25 et sa partie 36 enveloppant la partie massive 26, un épaulement 37 sur la surface intérieure duquel est ménagée une surface concave 38 conjuguée de la surface convexe 18, les rayons de courbure de ces deux surfaces étant donc pratiquement égaux. La surface concave 38 est reliée à la partie plus mince 36 par un décrochement 39 sur lequel peut venir prendre appui le décrochement radial 17 lorsque le profilé 7 et la vitre 6 ont une inclinaison appropriée (Fig.4).

La surface concave 28 est positionnée de manière qu'une droite diamétrale D passant par son centre (Fig.4) passe également par un point voisin de l'axe d'articulation X-X de la branche 19.

L'accouplement du profilé 7 préalablement fixé à la vitre 6, et du profilé 8 porté par le bras 3, est exécuté de la manière suivante, par un robot non représenté, portant la vitre 6 par exemple par des ventouses électropneumatiques.

La vitre 6 et le profilé 7 exécutent une descente au-dessus du profilé 8 avec une inclinaison appropriée sur la verticale (Fig.3). Le profilé 7 est ainsi incliné vers la branche flexible 21, sa partie massive 12 pénètre entre les bords 24,25 de l'entonnoir et écarte la branche 21. La lèvre 14 vient s'appliquer sur la partie inférieure de l'évidement 35, tandis que le décrochement 17 vient au contact de la surface concave 38.

Le robot commande la poursuite de la descente de la vitre 6 et du profilé 7 jusqu'au fond du profilé 8.

La branche 21 continue à s'écarter de la partie massive 26 jusqu'à ce que la lèvre 14 glisse sur la lèvre 33 et parvienne au contact avec la surface concave 28, sur laquelle prend donc également appui la surface convexe 13 (Fig.4). En même temps, le décrochement 17 a franchi l'arête de séparation entre la surface concave 38 et le dégagement 39 sur lequel il vient prendre appui. Au terme de cette manoeuvre le profilé 7 est clipsé dans le profilé 8 dont la branche 21 s'est rabattue sur la partie massive 12. Celle-ci est alors retenue emprisonnée entre les branches 19 et 21 par la force élastique appliquée sur la surface convexe 18 par la surface concave conjuguée 38, et par l'appui de la surface convexe 16 sur la partie supérieure complémentaire de l'évidement 35.

A ce sujet il est important de noter que le positionnement de la droite D par rapport à l'axe X-X tel qu'expliqué ci-dessus, s'oppose au déclipsage de la branche 21 et garantit donc le maintien du profilé 7 dans le profilé 8. Bien entendu, si toutefois une traction suffisamment élevée est exercée sur le profilé 7 pour le déclipser du profilé 8, la branche 21 s'écartera et libèrera le profilé 7. En pratique, à titre indicatif, les sections des profilés 7 et 8 peuvent être déterminées de telle façon que le profilé 7 peut s'emboîter dans le profilé 8 sous un effort de 5 kg, alors qu'il faut une force de 30 kg pour l'en arracher.

Dans leur position normale finale, le profilé 7 et la vitre 6 sont dans une position telle que la lèvre 14 vient se loger dans l'évidement 32 et que la surface convexe 18 vient en appui sur la surface concave 38.

Il existe après clipsage, un degré de liberté en rotation d'angle A entre les profilés 7 et 8, et un degré de liberté en translation du profilé 8 par rapport au profilé 7. L'angle A (Fig.4) permet aux profilés 7 et 8 de pivoter l'un par rapport à l'autre lors de la course de fonctionnement de la vitre 6.

Le profilé 7 est beaucoup plus long que le profilé 8, afin que ce dernier puisse coulisser sur le profilé 7 pendant les manoeuvres du lève-vitre.

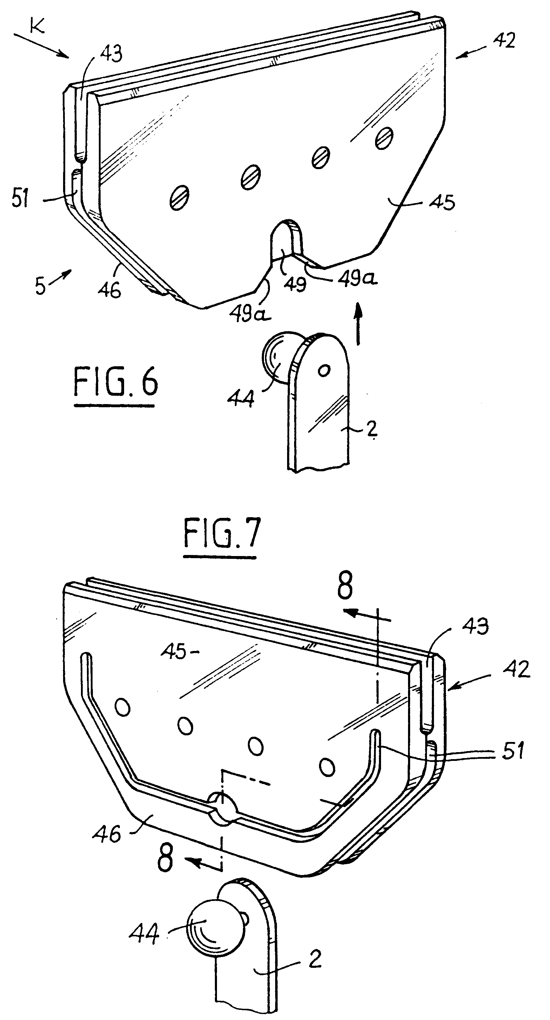

On décrira maintenant le second dispositif d'accouplement 5 en référence aux Fig.6 à 10.

Ce dispositif comprend un profilé unique 42 présentant une gorge 43 adaptée pour recevoir le bas de la vitre 6, et des moyens pour assurer par clipsage d'une partie de ce profilé une articulation rotulante sur une sphère 44 formant rotule, fixée à l'extrémité du bras 2.

Le profilé 42 étant fixé à la vitre 6, son accouplement avec la sphère 44 est exécuté par un déplacement de la vitre 6 sensiblement dans son plan et dans celui de son mouvement, qui confère à la sphère 44 trois degrés de liberté en rotation par rapport au profilé 42.

Ce dernier comprend une partie rigide 45 et une partie souple 46 articulée élastiquement sur la partie rigide 45 sur laquelle elle est normalement maintenue en appui, en formant avec celle-ci une pince pouvant emprisonner la sphère 44 par clipsage de la partie élastique 46 sur la partie rigide 45.

Des logements 47 et 48 de forme sphérique complémentaire sont agencés en vis-à-vis l'un de l'autre dans les faces en regard des deux parties 45 et 46 et sont adaptés pour recevoir la sphère 44. Dans le logement 47 de la partie rigide 45 débouche une entaille 49 évasée, ménagée dans le bord inférieur de la partie 45, et dont les bords 49a sont chanfreinés pour faciliter l'introduction de la sphère 44 dans le logement 47.

La partie articulée 46 est une bande latérale s'étendant le long du bas du profilé 42 ainsi que sur ses côtés, sensiblement jusqu'à la base de la gorge 43. Cette bande 46 est délimitée par un évidement 51 ménagé dans le profilé 42 et qui débouche dans la face de celui-ci opposée à sa partie rigide 45. Le contour de l'évidement 51, qui forme sur cette face une rainure de forme approximativement en C dans l'exemple représenté, est tel que la bande 46 a une forme d'anse, pouvant s'écarter élastiquement de la partie rigide 45 sur une poussée de la sphère 44.

Le bord 52 de la bande élastique 46 est chanfreiné en regard de l'entaille 49, afin de faciliter l'écartement de la bande 46 et l'introduction de la sphère 44 jusque dans son logement.

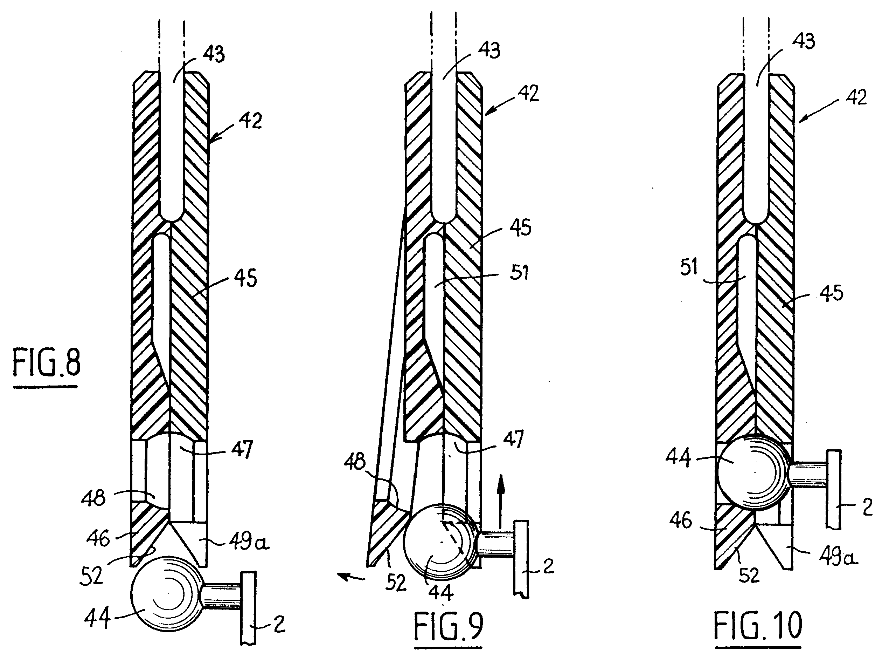

L'accouplement du profilé 42 fixé à la vitre 6 et de la sphère 44 portée par le bras 2 est illustré aux Fig.8 à 10. Sur la Fig.8 le profilé 42 se présente avec son entaille 49 au-dessus de la sphère 44. Le robot abaisse alors la vitre et le profilé 42, de telle sorte que la sphère 44 glisse sur les bords chanfreinés 49a et 52 en écartant élastiquement la bande périphérique 46 (Fig.9).

Le robot poursuit la descente du profilé 42 jusqu'à ce que (Fig.10) la sphère 44 vienne s'emboîter complètement dans son logement 47,48, après clipsage de la bande 46. (Sur les Fig.8 à 10 on a représenté par commodité le profilé 42 fixe et la sphère 44 mobile, alors qu'en réalité c'est l'inverse.)

Cette opération d'accouplement est donc particulièrement simple puisqu'elle peut être exécutée par une seule translation verticale commandée par le robot. Après clipsage, la sphère 44 et le bras disposent de trois degrés de liberté en rotation par rapport au profilé 42.

L'accouplement entre la vitre 6 et le lève-vitre 2 peut être réalisé soit comme dans l'exemple illustré à la Fig.1 par un dispositif 5 équipé d'un profilé 42 fixe par rapport à la vitre 6 et un dispositif 4 muni d'un profilé 8 coulissant par rapport à la vitre ; soit par un seul dispositif 5 permettant de lier une vitre 6 à un lève-vitre du type "à rail".

Parmi les variantes d'exécution possibles, figure l'inversion des surfaces concaves et convexes des profilés 7 et 8 : ainsi les surfaces 13 et 28, 38 et 18 pourraient être inversées, de même que la lèvre 14 et la gorge 32.

## Revendications

1. Dispositif d'accouplement entre une vitre (6) et un mécanisme (2) de lève-vitre dans un véhicule automobile, comprenant deux profilés conjugués (7, 8) dont un premier profilé (7) est adapté pour pouvoir être fixé au bas de la vitre (6) et le second profilé (8) est agencé pour être articulé sur un bras (3) du lève-vitre, et les sections de ces profilés étant telles que le premier profilé (7) peut être emboîté dans le second (8), les sections conjuguées des deux profilés (7, 8) définissant un degré de rotation et un degré de translation, caractérisé en ce que le profilé (8) porté par le bras (3) du lève-vitre est ouvert en entonnoir et comporte une branche flexible (21) délimitant un bord (25) de l'entonnoir et pouvant s'écarter élastiquement d'une branche rigide (19), et la surface inférieure (13) du profilé (7) fixée à la vitre (6) est arrondie pour faciliter l'introduction du profilé dans l'entonnoir puis l'écartement de la branche flexible (21) et en ce que les deux profilés (7, 8) s'emboîtent par clipsage et par un déplacement situé sensiblement dans le plan général de la vitre (6) et du mouvement de celle-ci.

2. Dispositif selon la revendication 1, caractérisé en ce que ledit premier profilé (7) présente une lèvre (14) saillant latéralement en section et s'étendant longitudinalement en limitant de ce côté la surface arrondie (13), et dans la branche rigide, non flexible (19) du second profilé (8),est formée une gorge (32) longitudinale ouverte vers le bas, adaptée pour recevoir ladite lèvre (14) et maintenir les profilés (7, 8) assemblés après clipsage, la lèvre étant incurvée et orientée vers le haut lorsque la vitre est sensiblement verticale.

3. Dispositif selon la revendication 2, caractérisé en ce que la surface arrondie (13) est limitée, du côté opposé à la lèvre (14), par un décrochement radial (17) prolongé par une surface convexe (18) qui peut venir en appui, après clipsage, sur une surface concave conjuguée (38) formée intérieurement sur l'extrémité (37) de la branche flexible (21).

4. Dispositif selon la revendication 3, caractérisé en ce que la branche flexible (21) est articulée sur la branche rigide (19) autour d'un axe longitudinal (X-X) et la branche rigide (19) présente une surface intérieure concave (28) d'appui pour le premier profilé (7) et dont le rayon de courbure correspond à celui de la surface arrondie (13) du premier profilé.

5. Dispositif selon la revendication 3, caractérisé en ce que la surface concave (38) de la branche flexible (21) est positionnée de manière qu'une droite diamétrale (D) passant par son centre passe également par un point voisin de l'axe d'articulation (X-X) de la branche flexible (21) sur la branche rigide (19).

6. Dispositif selon la revendication 1, caractérisé en ce que la branche rigide (19) du second profilé (8) comporte une surface convexe complémentaire d'une surface concave du premier profilé (7), et l'extrémité de sa branche flexible (21) est munie d'une surface convexe coopérant avec une surface concave conjuguée du premier profilé (7) après clipsage pour retenir ce dernier dans le second profilé (8).

## Claims

1. Coupling device between a window (6) and a window-raiser mechanism (2) in a motor vehicle, comprising two matching sections (7, 8) of which a first section (7) is designed to be capable of being fastened to the bottom of the window (6) and the second section (8) is arranged to be articulated on an arm (3) of the window raiser, and the cross-sections of these sections being such that the first section (7) can be locked into the second (8), the matching cross-sections of the two sections (7, 8) defining a degree of rotation and a degree of translational motion characterized in that the section (8) carried by the arm (3) of the window raiser is open in the form of a funnel and has a flexible branch (21) delimiting one edge (25) of the funnel and capable of moving elastically apart from a rigid branch (19), and the lower surface (13) of the section (7) fastened to the window (6) is rounded to make it easier to introduce the section into the funnel and then move apart the flexible branch (21) and in that the two sections (7, 8) lock together by snapping and as a result of a displacement lying substantially in the general plane of the window (6) and of the movement of the latter.

2. Device according to Claim 1, characterized in that the said first section (7) has a lip (14) projecting laterally, as seen in cross-section, and extending longitudinally, limiting the rounded surface (13) on this side, and formed in the rigid inflexible branch (19) of the second section (8) is a downwardly open longitudinal groove (32) designed to receive the said lip (14) and keep the sections (7, 8) joined together after snapping, the lip being curved and directed upwards when the window is substantially vertical.

3. Device according to Claim 2, characterized in that the rounded surface (13) is limited, on the opposite side to the lip (14), by a radial offset (17) extended by a convex surface (18) which, after snapping, can come to bear on a matching concave surface (38) formed internally on the end (37) of the flexible branch (21).

4. Device according to Claim 3, characterized in that the flexible branch (21) is articulated on the rigid branch (19) about a longitudinal axis (X-X), and the rigid branch (19) has an inner concave bearing surface (28) which is intended for the first section (7) and the radius of curvature of which corresponds to that of the rounded surface (13) of the first section.

5. Device according to Claim 3, characterized in that the concave surface (38) of the flexible branch (21) is positioned in such a way that a diametral straight line (D) passing through its centre also passes through a point adjacent to the axis of articulation (X-X) of the flexible branch (21) on the rigid branch (19).

6. Device according to Claim 1, characterized in that the rigid branch (19) of the second section (8) has a convex surface complementary to a concave surface of the first section (7), and the end of its flexible branch (21) is equipped with a convex surface interacting with a matching concave surface of the first section (7) after snapping, in order to retain the latter in the second section (8).

## Patentansprüche

1. Vorrichtung zur Kupplung zwischen einer Fensterscheibe (6) und einem Fensterhebemechanismus (2) in einem Kraftfahrzeug, mit zwei einander zugeordneten Profilen (7,8), von denen ein erstes Profil (7) an der Unterseite der Fensterscheibe (6) befestigbar ist und das zweite Profil (8) an einem Arm (3) des Fensterhebers angelenkt ist, wobei die Abschnitte der Profile derart ausgebildet sind, daß das erste Profil (7) in das zweite Profil (8) einsteckbar ist, und wobei die einander zugeordneten Abschnitte der beiden Profile (7,8) einen Schwenk-Grad und einen Translations-Grad definieren,
**dadurch gekennzeichnet,**
daß das von dem Arm (3) des Fensterhebers getragene Profil (8) trichterförmig geöffnet ist und einen flexiblen Abschnitt (21) aufweist, der einen Rand (25) des Trichters begrenzt und sich elastisch von einem starren Abschnitt (19) wegbewegen kann, und daß die untere Fläche (13) des an der Fensterscheibe (6) befestigten Profils (7) gerundet ist, um bei der Wegbewegung des flexiblen Abschnitts (21) die Einführung des Profils in den Trichter zu erleichtern, und daß die beiden Profile (7,8) durch Einschnappen und durch Verschiebung im wesentlichen in der Hauptebene der Fensterscheibe (6) und deren Bewegung zusammensteckbar sind.

2. Vorrichtung nach Anspruch 1, dadurch gekennzeichnet, daß das erste Profil (7) eine Lippe (14) aufweist, die im Schnitt betrachtet seitlich vorsteht und die in Längsrichtung verläuft, wobei sie auf dieser Seite die gerundete Fläche (13) begrenzt, und daß in dem unflexiblen starren Abschnitt (19) des zweiten Profils (8) eine nach unten hin offene Längsnut (32) ausgebildet ist, die in der Lage ist, die Lippe (14) aufzunehmen und die Profile (7,8) nach dem Einschnappen zusammenzuhalten, wobei die Lippe gekrümmt und bei im wesentlichen vertikal angeordneter Fensterscheibe (6) nach oben hin ausgerichtet ist.

3. Vorrichtung nach Anspruch 2, dadurch gekennzeichnet, daß die gerundete Fläche (13) an der der Lippe (14) gegenüberliegenden Seite durch eine radiale Stufe (17) begrenzt ist, die durch eine konvexe Fläche (18) verlängert ist, welche nach dem Einschnappen in Anlage an eine konkave Gegenfläche (38) gelangen kann, welche innen an dem Ende (37) des flexiblen Abschnitts (21) ausgebildet ist.

4. Vorrichtung nach Anspruch 3, dadurch gekennzeichnet, daß der flexible Abschnitt (21) auf dem starren Abschnitt (19) um eine Längsachse (X-X) schwenkbar ist und der starre Abschnitt (19) eine innere konkave Anlagefläche (28) für das erste Profil (7) aufweist, deren Krümmungsradius demjenigen der gerundeten Fläche (13) des ersten Profils entspricht.

5. Vorrichtung nach Anspruch 3, dadurch gekennzeichnet, daß die konkave Fläche (38) des flexible Abschnitts (21) derart positioniert ist, daß eine durch deren Mitte verlaufende diametrale Gerade (D) ferner durch einen Punkt verläuft, der sich nahe der Achse (X-X) der Verschwenkung des flexiblen Abschnitts (21) um den starren Abschnitt (19) befindet.

6. Vorrichtung nach Anspruch 1, dadurch gekennzeichnet, daß der starre Abschnitt (19) des zweiten Profils (8) eine konvexe Fläche aufweist, die zu einer konkaven Fläche des ersten Profils (7) komplementär ist, und daß das Ende des flexiblen Abschnitts (21) des zweiten Profils (8) mit einer konvexen Fläche versehen ist, die nach dem Einschnappen mit einer konkaven Gegenfläche des ersten Profils (7) zusammenwirkt, um dieses in dem zweiten Profil (8) zu halten.
